# EUROPEAN PATENT APPLICATION

(11) **EP 1 380 963 A1**
(43) Date of publication of application: **14.01.2004**
(21) Application number: 02015347.4
(22) Date of filing: 10.07.2002
(51) Int. Cl.: G06F 17/24, G06F 17/18

(54) **A method and computer based system for displaying of time variant tabular data**

(71) Applicant: SAP Aktiengesellschaft, 69190 Walldorf (DE)
(72) Inventor: Merkel, Michael, 68549 Ilvesheim (DE); Meessen, Marlies, 69181 Leimen (DE)
(74) Representative: Richardt, Markus Albert

(57) **Abstract**

The present invention relates to a method and a computer system of operating a digital computer for displaying of tabular data. The tabular data comprises first data being descriptive of instances of an entity and second data comprising time variant parameter values. The parameter values are analysed to identify time intervals, where none of the parameter values of any of the instances changes. These time intervals form the basis for the generation of sub-sets of the tabular data to be displayed on a graphical user interface.

## Description

### Field of the invention

This invention relates generally to methods for displaying information using computers, and more particularly, to the presentation of information contained in electronic spreadsheets and databases in tabular form.

### Background and prior art

Spreadsheet and database applications allow users to view and manipulate tabular data, i.e., information organized into rows and columns. Often, the tabular data is too large to fit on the display screen. Existing applications address this problem by providing users with the ability to scroll information both vertically and horizontally. In a windowing desktop environment, such as SAP R/3, Microsoft Windows and the like, the problem of fitting information on the screen is exacerbated, because a plurality of windows can appear on the screen simultaneously, and each window may be significantly smaller than the display screen. Furthermore, users of most windowing desktop environments may interactively or dynamically change the size of a window at any time, which may reduce the available space for displaying tabular data.

Several existing systems attempt to overcome the problem of using tables that are wider than the window space available to display them.

One prior art method, chiefly implemented in database applications rather than spreadsheet applications, is that when a record is selected for viewing or editing, it is displayed in a separate window or form. The disadvantage of this method is that only one record at a time may be viewed or edited in its entirety, and the viewing or editing window may obscure all or part of the window that displays tabular data in rows and columns.

Another prior art method, taught in U.S. Pat. No. 5,317,306, allows the user to determine which columns are most important to him or her, and to designate those columns as "sticky." When a table contains more columns of information than can be displayed simultaneously, the user must scroll horizontally to view an entire row. The "sticky" columns remain in the display window when the user enters a command for horizontal scrolling. A similar prior art method is used in Microsoft Corporation's Excel spreadsheet application, in which a user may select a row, column, or cell, and choose to "freeze panes," which splits the window, thereby causing all rows and columns above and to the left of the selected position to remain frozen in place while the rest of the display remains responsive to scrolling commands. In the prior art, a user also may make additional room in the window by designating a row or column as hidden, which suppresses its display until said row or column is unhidden by a user command.

Still another prior art method is disclosed in U.S. Pat. No. 5,621,876, which teaches a method for increasing the number of columns in the display by adding an additional column when the user selects an "increase activator" button. This method makes the window larger, if the additional column will fit on the display screen. Otherwise, it makes the other columns narrower to accommodate the additional column.

Further, US patent no. 6,313,848 shows a method of viewing wide tables with reduced need for horizontal scrolling. The method includes the steps of determining the width of each column, determining the height of each row, and determining the dynamic height and width of the workspace available for the display of tabular data within said window and dividing the tabular data into table segments, each table segment comprising one or more columns of said tabular data.

Another problem which is encountered in the prior art is the display of tabular data which is time variant. For such data no intuitive display format has been found in the prior art.

It is therefore an object of the present invention to provide an improved method and computer system for displaying of tabular data which enables to generate an intuitive and user friendly display for time variant data.

### Summary of the invention

The present invention is directed to a method of operating a digital computer for the display of tabular, time variant data. In essence, the invention enables to identify time intervals for the convenient display of the tabular data in an intuitive way. Further this enables to create a graphical user interface which allows a user to conveniently navigate through the time variant tabular data.

In accordance with a preferred embodiment of the invention an index is generated. The index comprises the time intervals as keys to tabular data which is valid during a given interval.

Further the invention is directed towards a computer program product to operate a digital computer accordingly and to a computer system which implements a method of the present invention.

### Brief description of the drawings

Other features and advantages of the present invention will be described in further detail with reference to the accompanying drawings. The figures of the accompanying drawings illustrate the present invention by way of example and not limitation.
- Figure 1: is a block diagram of a computer system in which the present invention is embodied;
- Figure 2: is illustrative of time variant tabular data to be displayed,
- Figure 3: is illustrative of time intervals of validity of parameter values of instances of an entity,
- Figure 4: is illustrative of the determination of time intervals for the display of the tabular data of figure 2,
- Figure 5: is illustrative of a tabular display of the data for a selected time interval and the elements of a graphical user interface which enable navigation through the time intervals,
- Figure 6: is illustrative of a flow chart of a preferred embodiment of a method of the present invention,
- Figure 7: shows an index which has been created in accordance with the method of figure 5.

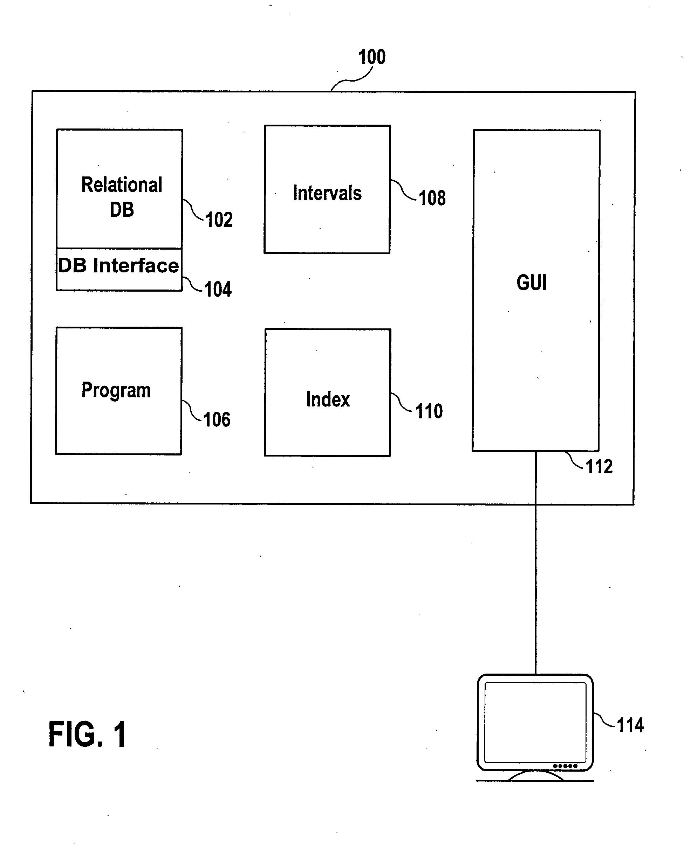

Figure 1 shows a computer system 100 having a relational database 102. The relational database 102 has a database interface 104 for exporting of time variant tabular data.

Further the computer system 100 has a program 106 which serves to search the tabular data which has been exported from the relational database 102 via the interface 104 for time intervals where the data has constant parameter values. Further the program 106 enables a user to select a sub-set of the data contained in the tabular data exported from the relational database 102 to form the basis of the analysis.

The intervals which have been identified by the program 106 are stored in storage 108.

Further the program 106 generates an index with the identified time intervals as keys. The keys serve to access tabular data contained in the tabular data which has been exported from the relational database 102 which is constant during a given one of such intervals. The index is stored in storage 110.

Further the computer system 100 has a graphical user interface (GUI) 112 which serves to display the tabular data. The GUI 112 contains virtual buttons, pull down or pop up menus which allow a user to interactively navigate the tabular data along a time axis. The GUI 112 is coupled to display unit 114.

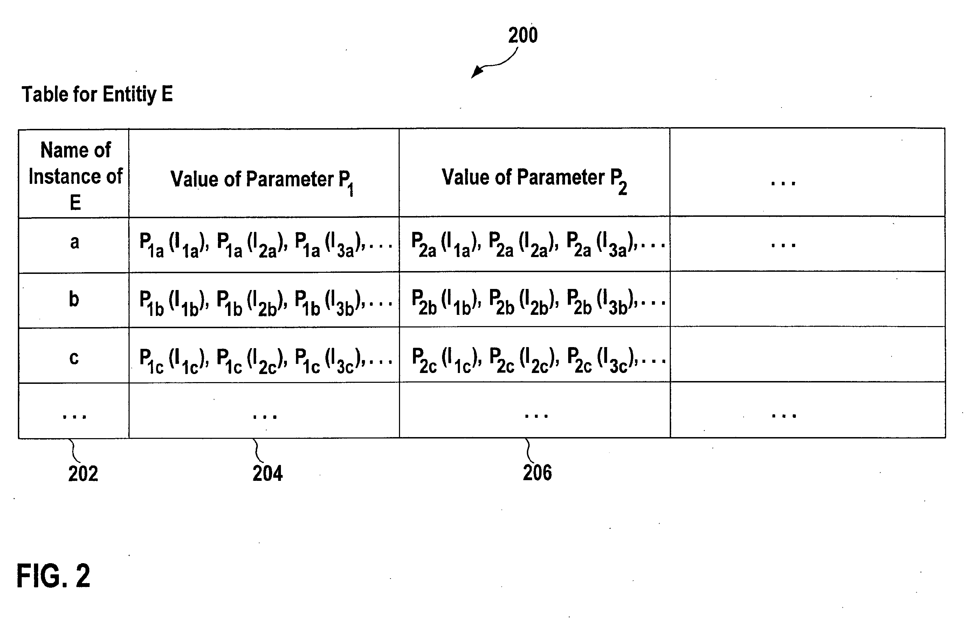

Figure 2 shows a table 200 of tabular data which is exported from the relational database 102 (cf. figure 1) by way of example. The table 200 contains data which relate to an entity E. In principle the entity E can be of any category such as person, object, place, event or business data. For example, in the case of a business computer system, the entity E can relate to customers or customers' orders. Furthermore the entity E can relate to the sections of a building, each of the sections having a specific disposable size and capacity which is time variant.

The table 200 has a column 202 containing the names of instances of the entity E. In the example considered here the names are represented by "a", "b", "c",... For example the name can designate a certain section of a building , such as garden area, parking area, living area, office area,...

Further the table 200 has a column 204 containing values of a parameter P₁ for the instances of the entity E contained in the column 202. The value of the parameter P₁ is time variant. For example the parameter P₁ can indicate the disposable size of a particular section of the building for planning, business or logistic purposes.

The value P₁ₐ(I₁ₐ) represents the value of the parameter P₁ of the instance a of the entity E during the time interval I₁ₐ. Likewise P₁ₐ(I₂ₐ) represents the value of the parameter P₁ during a subsequent time interval I₂ₐ, etc.

P_{1b}(I_{1b}) represents the value of the parameter P₁ for the instance b of the entity E during the time interval I_{1b}. Likewise P_{1b}(I_{2b}) represents the value of the parameter P₁ of the instance b during a subsequent time interval I_{2b}, etc.

In other words, each field within the column 204 contains a time series of the values of the parameter P₁ for the corresponding instance.

Further the table 200 contains a column 206 for storing time variant values of a parameter P₂. For example the parameter P₂ can indicate the capacity of a given section of the building.

Again the same nomenclature is used as in the case of the parameter P₁: P₂ₐ (I₁ₐ) represents the value of the parameter P₂ of the instance a of the entity E during the time interval I₁ₐ, etc.

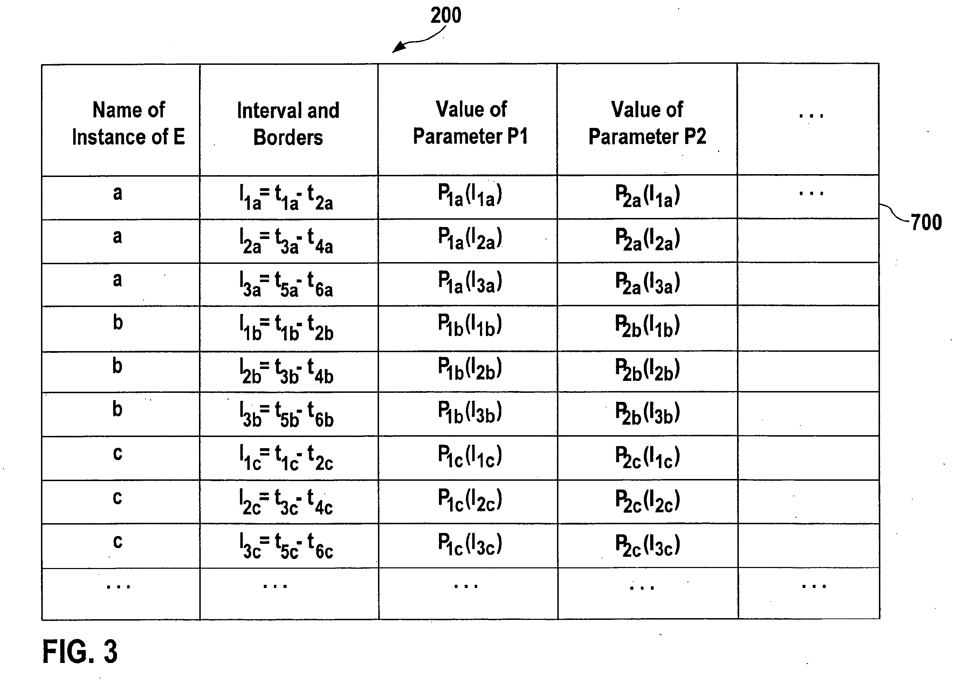

Figure 3 shows table 200 in another format where each row of the table corresponds to one time interval I. For example the row 700 contains the values of P₁ₐ(I₁ₐ) and P₂ₐ(I₁ₐ) for the instance "a" during the time interval I₁ₐ = t₁ₐ-t₂ₐ. It is to be noted, that the time intervals of validity of the parameter P₂, i.e. I₁ₐ, I₂ₐ, I₃ₐ, ... do not need to be the same as for the parameter P₁. However for simplicity and for convenience of explanation this assumption is made in the following without restriction of generality.

When the table 200 is exported from the relational database 102 (cf. figure 1) the program 106 is started to analyse the table 200 in order to identify time intervals during which no change of relevant parameter values occurs. For the purpose of this analysis a user can select one or more of the columns 204, 206, ... (cf. figure 2) of the table 200 to be considered for the analysis. In the case considered here the columns 204 and 206 are analysed by the program 106 in order to identify such intervals where the parameter values P₁ and P₂ do not change. The principle of this analysis is illustrated in figure 3.

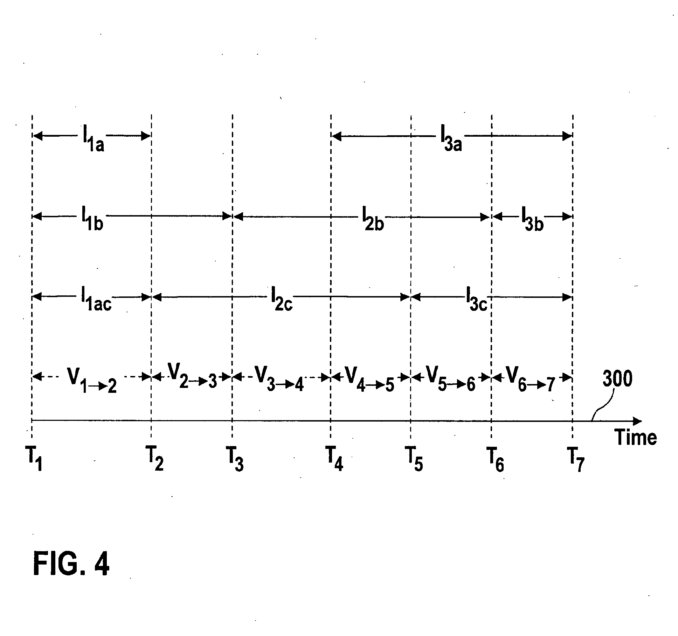

Figure 4 shows a time axis 300 and the time intervals I₁ₐ, I₃ₐ; I_{1b}, I_{2b}, I_{3b}; I_{1c}, I_{2c}, I_{3c} during which the values of the parameters P₁ and P₂ of the respective instances a, b and c remain constant. In the example considered here the time t₁ₐ is T₁ = t_{1b} = t_{1c}. Further in this example t₂ₐ is T₂ = t_{2c}. Likewise t_{2b} is T₃ and t₅ₐ is T₄, etc. It is to be noted that there can be gaps in the tabular data, i.e. time intervals for which there is no data entry. This is the case for the time interval I₂ₐ of the instance a.

The computer program 106 (cf. figure 1) identifies such time intervals V during which all of the parameter values P₁ and P₂ considered remain constant for all of the instances of the considered entity E. For example all of the parameter values of parameters P₁ and parameters P₂ remain unchanged between the times T₁ and T₂. The corresponding time interval identified by the program 106 is designated as V_{1→2}, etc. Further all of the parameter values of parameters P₁ and parameters P₂ remain unchanged between the times T₂ and T₃. It is to be noted that the instance "a" is not considered for the corresponding time interval V_{2→3} as there is no data for "a" within that time interval.

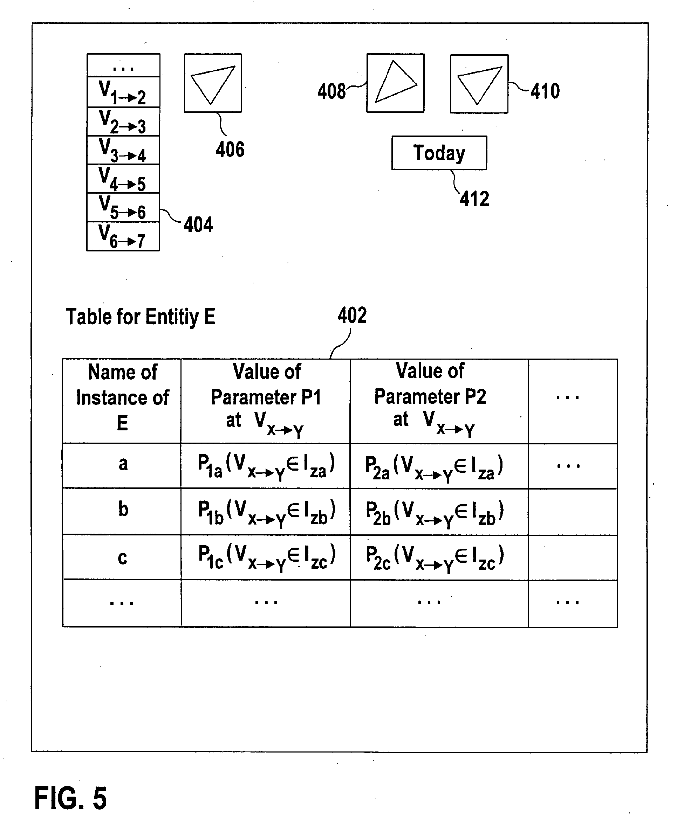

Figure 5 is illustrative of a corresponding display on display unit 114 (cf. figure 1). A window 400 with a table 402 is displayed on the display unit 114. The table 402 shows a subset of the tabular data contained in the table 200 (cf. figure 2) .

The sub-set is determined by the user selected time interval V_{x→y} of the set of intervals V_{1→2}, V_{2→3}, V_{3→4}, V_{4→5}, V_{5→6} and V_{6→7} (cf. figure 3). Irrespective of the user's selection of a particular one of the intervals V, each of the intervals V is completely contained or equal to a time interval I_{za}, I_{zb}, I_{zc} of the instances a, b, c, respectively, where z = 1, 2, 3, ...

This way the program 106 (cf. figure 1) provides a filter function to reduce the table 200 to the table 402 only containing data which are valid during a user selected time interval V.

The selection of one of the previously identified intervals V can be done by means of drop down list 404. When a user selects the button 406, the drop down list 404 appears and shows the intervals V which are available for the users selection.

Alternatively a user can select a time interval V by stepwise navigation. For this purpose there are buttons 408 and 410. When the user selects button 408 the previous time interval V is selected. When the user selects button 410 the succeeding time interval V is selected.

For example if the present selection is the time interval V_{3→4} the user can select the preceding time interval V_{2→3} for the filter function, such that table 402 shows those data of table 200 (cf. figure 2) which do not change during the time interval V_{2→3} instead of interval V_{3→4}. Likewise the user can select the subsequent time interval V_{4→5} by "clicking" on button 410.

Further the graphical user interface has a button 412 which corresponds to the default setting. When the button 412 is selected this means that the user selects the time interval V which contains the present time such that the table 402 shows the data which is presently valid.

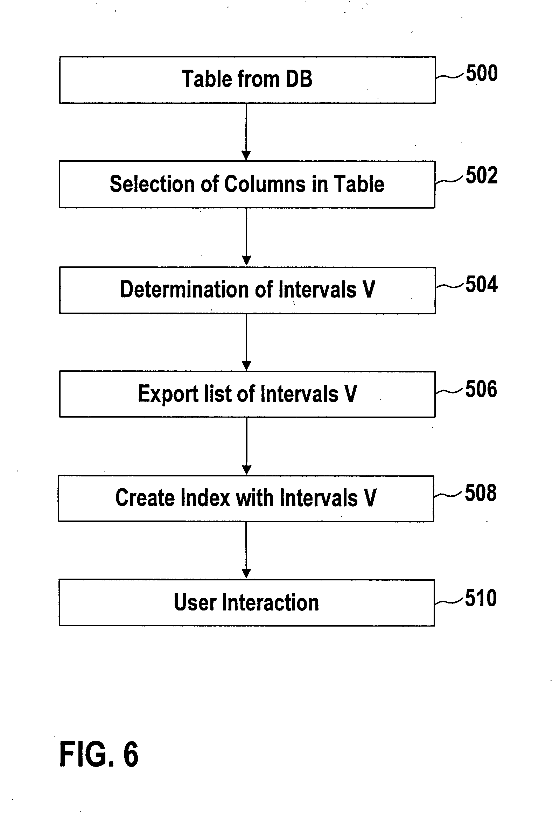

Figure 6 shows a flowchart which is illustrative of a mode of operation of the computer system 100 (cf. figure 1).

In step 500 tabular data is exported from the relational database 102. The tabular data can have a form which is equivalent to table 200 (cf. figure 2).

In step 502 one or more columns of the table containing parameter data is selected to form the basis of the analysis.

The analysis is performed in step 504 in order to identify time intervals V during which none of the parameter data in the selected columns change. This list of intervals V is exported in step 506 such that the graphical user interface 112 can access the list of intervals V for the creation of a corresponding drop down list (cf. drop down list 404 of figure 4).

In step 508 an index is generated containing the intervals V as keys. Each of the keys serves to access a sub-set of the parameter data contained in the table 200 which is time invariant during a given interval V. In step 510 a user selects one of the intervals V to generate a corresponding display of tabular data of the type shown in Fig. 5.

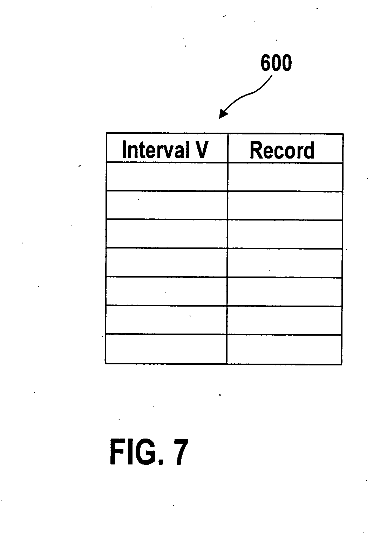

Figure 7 shows an example for such an index 600. The index 600 has the form of a look-up table and contains a list of the identified intervals V as keys. Each of the intervals V has an associated data record which indicates a subset of the table 200 containing parameter data which is time invariant during the considered time interval V. The index 600 enables to efficiently generate a table 402 (cf. figure 4) when the user navigates along the time axis.

It is to be noted that the method of the present invention is data driven, i.e. the time intervals V are not preset but are only determined by the data itself. This provides for a maximum degree of flexibility and ease of use. Furthermore it is to be noted that the time intervals V span the complete observation time and leave no gaps on the time axis which is important to ensure that a user will not miss data when navigating along the time axis. Furthermore it is also to be noted that the time intervals V can leave gaps on the time axis for periods of time where there are no relevant entries for parameter values of the instances. In other words no time intervals V are created for periods of time where no data entries exist.

### List of reference numerals:

- computer system: 100
- relational database: 102
- interface: 104
- program: 106
- storage: 108
- storage: 110
- GUI: 112
- display unit: 114
- table: 200
- column: 202
- column: 204
- column: 206
- time axis: 300
- window: 400
- table: 402
- drop down list: 404
- button: 406
- button: 408
- button: 410
- button: 412
- step: 500
- step: 502
- step: 504
- step: 506
- step: 508
- step: 510
- index: 600
- row: 700

## Claims

1. A method of operating a digital computer for displaying of tabular data, the tabular data comprising first data being descriptive of instances of an entity and second data, each of the second data comprising a parameter value of one of the first data and having an associated first time interval of validity of the parameter value, an observation time interval covering the first time intervals, the method comprising the steps of:
a) determining second time intervals, each of the second time intervals being within the boundaries of at least one of the first time intervals without partly overlapping any of the first time intervals, the concatenated second time intervals completely covering the observation time interval,
b) selecting one of the second time intervals,
c) displaying a table containing a sub-set of the first data, each of the first data of the sub-set having a valid parameter value during the selected second time interval.

2. The method of claim 1 further comprising generating an index comprising each one of the second time intervals as keys to first data and associated parameter values being valid during one of the second time intervals.

3. The method of claim 1 further comprising generating a menu for a user's selection of one of the second time intervals.

4. The method of claim 1 further comprising providing a selection component of a graphical user interface for stepwise selection of second time intervals.

5. The method of claim 1 further comprising providing a present time selection component of a graphical user interface for selecting one of the second time intervals comprising the present time.

6. The method of claim 1 further comprising exporting the tabular data from a relational database and selecting the first and the second data from the tabular data before the determination of the second time intervals.

7. A computer program product comprising a program component adapted to operate a computer according to the method of claim 1.

8. A computer system for displaying of tabular data, the tabular data comprising first data being descriptive of instances of an entity and second data, each of the second data comprising a parameter value of one of the first data and having an associated first time interval of validity of the parameter value, an observation time interval covering the first time intervals, the computer system comprising:
a) a first component for determining second time intervals, each of the second time intervals being within the boundaries of at least one of the first time intervals without partly overlapping any of the first time intervals, the concatenated second time intervals completely covering the observation time interval,
b) a user input component for selecting one of the second time intervals,
c) a display component for displaying a table containing a sub-set of the first data, each of the first data of the sub-set having a valid parameter value during the selected second time interval.

9. The computer system of claim 8 further comprising an index component for generating an index comprising each one of the second time intervals as keys to first data and associated parameter values being valid during one of the second time intervals.

10. The computer system of claim 8 further comprising a menu for a user's selection of one of the second time intervals.

11. The computer system of claim 8 further comprising a selection component of a graphical user interface for stepwise selection of second time intervals.

12. The computer system of claim 8 further comprising a present time selection component of a graphical user interface for selecting one of the second time intervals comprising the present time.

13. The computer system of claim 8 further comprising a relational database having an export component for exporting the tabular data and for selecting first and second data of the tabular data for the purpose of determining the second time intervals.
